# EUROPÄISCHE PATENTSCHRIFT

(11) **EP 2 941 947 B1**
(45) Veröffentlichungstag und Bekanntmachung des Hinweises auf die Patenterteilung: **12.07.2017**
(21) Anmeldenummer: 15001366.2
(22) Anmeldetag: 07.05.2015
(51) Int. Cl.: A01D 90/02, A01F 15/10

(54) **LADEWAGEN MIT EINER LADEVORRICHTUNG FÜR AUS HALM- ODER BLATTGUT BESTEHENDES ERNTEGUT**
LOADING VEHICLE WITH A LOADING DEVICE FOR CROP CONSISTING OF STEMS AND LEAVES
CHARIOT DE CHARGEMENT DOTÉ D'UN DISPOSITIF DE CHARGEMENT POUR LA RÉCOLTE DE PRODUITS EN TIGE OU EN FEUILLE

(30) Priorität: 08.05.2014 DE 102014106446
(43) Veröffentlichungstag der Anmeldung: 11.11.2015
(73) Patentinhaber: B. Strautmann & Söhne GmbH u. Co. KG, 49196 Bad Laer (DE)
(72) Erfinder: Kleine-Niesse, Richard, DE-49536 Lienen (DE)
(74) Vertreter: Träger, Denis

(56) Entgegenhaltungen:
- EP-A1- 2 168 427
- EP-A1- 2 387 872
- US-A1- 2012 304 612
- US-B1- 8 056 314

## Beschreibung

Die Erfindung betrifft einen Ladewagen mit einer Ladevorrichtung für aus Halm- oder Blattgut bestehendes Erntegut, umfassend:
- eine mit Aufnahmezinken besetzte Aufnahmevorrichtung mit einer Arbeitsbreite B, welche das Erntegut vom Boden aufnimmt,
- eine der Aufnahmevorrichtung nachgeordnet Pressvorrichtung zur Weiterleitung des Erntegutes und
- einen der Pressvorrichtung nachgeordneten Laderaum.

Die Pressvorrichtung umfasst einen Presskanal und einen Rotor mit in mehreren Reihen spiralförmig angeordneten Presszinken. Die Presszinken weisen eine Arbeitsbreite auf, die in etwa einer lichten Weite des Presskanals entspricht. Der Rotor weist eine Gesamtarbeitsbreite auf, die sich aus einer mittleren, sich über die Presszinken erstreckenden Arbeitsbreite sowie über beidseitig davon angeordnete, mit Querfördermitteln besetzte seitliche Arbeitsbreiten zusammensetzt. Die Querfördermittel sind als Schaufeln ausgebildet und leiten das von den Seitenbereichen der Aufnahmevorrichtung, im Folgenden auch Pick-up genannt, aufgenommenes Erntegut in Richtung des mit Presszinken besetzten Bereiches. Die Gesamtarbeitsbreite des Rotors und der Pick-up sind größer als die lichte Weite des Presskanals. Ein über die Gesamtbreite der Pick-up aufgenommener Futterschwad wird somit an die Preite des Presskanals angepasst.

Aus EP 2387782 A1 ist ein Ladewagen mit einer Ladevorrichtung bekannt, bei dem ein Rotor das von einer Pick-up aufgenommene Erntegut in einen Presskanal fördert, von wo es anschließend in den Laderaum gelangt. Der Rotor weist in seinem mittleren Arbeitsbereich zweiflüglige Zinkensterne auf, die auf einem zentralen Rohr angebracht sind. Die jeweils zwei Zinken haben einen Versatz von 180° zueinander. In den Seitenbereichen Q des Rotors sind Schneckenwindungen angeordnet, welche das Erntegut in Richtung des mit den Zinkensternen besetzten, mittleren, Arbeitsbereichs leiten. Zwar bilden die Schneckenwindungen Förderkanäle aus, diese Förderkanäle enden jedoch an den Schneckenenden. Auf Grund des hieraus resultierenden Abstandes zwischen Presszinken und Schneckenelementen wird ein Teil des den Presszinken von den Seiten zugeführten Ernteguts zwischen dem äußeren Presszinken und der Wand des Presskanals weitertransportiert.

Aus US 2012/0304612 A1 ist ein Fördersystem insbesondere für Ballenpressen bekannt, bei dem ein Rotor 50 zwei außen liegende Zonen (outboard feed zone) und eine innen liegende Zone (inboard feed zone) umfasst. Die außen liegenden Zonen sind mit je einem Schneckenblech besetzt, welches in den Seitenbereichen von der Pick-up aufgenommenes Erntegut zur Mitte bzw. zur inneliegenden Zone hin fördert. Die innen liegenden Zone ist mit Zinken (feed finger 52) besetzt. Die Zinken wirken mit einer nachgeordneten Förderrolle (floor roll 42) zusammen, welche das Erntegut von den Zinken abstreift und weiterfördert. Alle Zinken durchlaufen in der Förderrolle eingebrachte Vertiefungen (groove 62), so dass auch die äußeren Zinken nicht unmittelbar an die Schneckenwindung anschließen sondern von dieser beabstandet sind.

Aus EP 0815720 A1 ist eine Ballenpresse bekannt, die ebenfalls eine Pick-up und einen nachgeordneten Schneidrotor sowie eine Presskammer umfasst. Schneidrotor und Presskammer weisen die gleiche Breite auf und sind schmaler als die Pick-up. Auf dem Schneidrotor sind in den mitnehmerfreien Endabschnitten Querförderschnecken angeordnet, welche das von den Seitenbereichen der Pick-up aufgenommene Erntegut zur Mitte hin leiten. Nachteilig hierbei ist, dass die Windungen der Querförderschnecken nicht bis an die Mitnehmer heranreichen.

Zwischen den äußeren Mitnehmern und den Enden der Schneckenwindungen bleibt vielmehr ein Spaltbereich offen, durch welchen Erntegut ungeschnitten in die Presskammer gezogen werden kann oder der Gutsfluss so stark behindert werden kann, dass das Erntegut sich staut und/oder um die Walze wickelt.

Aus DE 202010002458 A1 ist ein Ladewagen bekannt, bei dem die Presszinken in geraden oder spiralförmigen Reihen auf dem Rotor angeordnet sind. Dabei bilden hintereinander angeordnete Presszinken gemeinsam jeweils eine Art Zinkenstern aus. Zwischen jeweils zwei Zinkensternen ist jeweils ein Schneidmesser positioniert. Im Ernteeinsatz presst der sich drehende Rotor das Erntegut an den feststehenden Schneidmessern vorbei. Da das Schneidwerk im Anfangsbereich des Presskanals angeordnet ist und eine Arbeitsbreite aufweist, die etwas kleiner ist, als die Breite des Presskanals, wird das Erntegut über die gesamte Breite des durch das Erntegut ausgebildeten Förderstroms gleichmäßig geschnitten.

Die Breite der Pick-up ist größer als die Breite der Pressvorrichtung, so dass zum einen die bei Kurvenfahrt schwieriger aufzunehmenden seitlichen Schwadbereiche einfacher sowie darüber hinaus auch breitere bzw. abschnittweise auseinander gezogene Futterschwaden aufgenommen werden können. Da die Pick-up merklich breiter ist als der Rotor und der Presskanal, sind zur Übergabe des Ernteguts von der breiteren Pick-up an den schmaleren Rotor Leitvorrichtungen vorgesehen, die in der genannten Schrift in den Figuren mit den Bezugszeichen 19 und 25 bezeichnet sind. Die Leitvorrichtungen wirken somit als Querfördermittel, die das Erntegut von außen bis vor den Presskanal transportieren. Diese Leitvorrichtungen sind aufwendig in der Herstellung und erfordern zusätzlichen Bauraum.

Aus DE 102009017400 A1 ist ein Ladewagen bekannt, der eine Pick-up zur Aufnahme von Erntegut vom Boden sowie einen nachgeordneten Förderrotor umfasst, welcher eine geringere Breite aufweist, als die Pick-up. Um das von Außenbereichen der Pick-up aufgenommene Erntegut dem Förderrotor zuzuführen, sind im Übergangsbereich von Pick-up zu Förderrotor stummelartig auslaufende Querförderschnecken als Querfördermittel vorgesehen. Diese Querfördermittel erfordern zusätzlichen Bauraum sowie eine zusätzliche Antriebseinrichtung.

Die Aufgabe der Erfindung ist es deshalb, einen Ladewagen mit einer Querfördereinrichtung vorzuschlagen, welche einen einfachen Aufbau ohne zusätzliche Antriebselemente aufweist und die Gefahr von Materialstauungen im Übergangsbereich zwischen Querfördereinrichtung und Mitnehmerzinken reduziert.

Zur Lösung der genannten Aufgabe wird ein Ladewagen vorgeschlagen, bei dem an jedem äußeren Presszinken auf dem Rotor eine der Schaufeln anschließt und bis an die jeweilige Spitze des jeweiligen Presszinkens spaltlos heranreicht, so dass zwischen den Schaufeln ausgebildete Spalten und zwischen den Presszinken befindliche Freiräume Förderkanäle bilden, in welchen von der Aufnahmevorrichtung zugeführtes Erntegut quer zur Flussrichtung des Erntegutstroms förderbar ist.

An jedem äußeren Presszinken auf dem Rotor schließt eine der Schaufeln an und reicht bis an die jeweilige Spitze des jeweiligen Presszinkens heran. Zwischen jeweils zwei Schaufeln wird so ein Spalt ausgebildet, der sich an den jeweiligen Freiraum zwischen den radialen Presszinken-Reihen anschließt. Unabhängig von Steigung und Förderrichtung der Presszinken-Reihen, weisen die in den beiden seitlichen Arbeitsbereichen angeordneten Schaufeln eine gegenläufige, jeweils den Presszinken zugewandte Förderrichtung auf, so dass das dem Rotor zugeführte Erntegut von außen zur Mitte hin gefördert wird.

Die spiralförmig verlaufenden Spalte zwischen den Schaufeln und die Freiräume zwischen den Presszinken bilden so Förderkanäle aus, welche widerstandsarm ineinander übergehen und durch den widerstandsarmen Übergang die Gefahr von Materialstauungen reduzieren. Durch die erfindungsgemäß angeordneten Schaufeln und Presszinken wird das von den Schaufeln zu fördernde Erntegut somit widerstandsarm zwischen die Presszinken gefördert, von denen es nachfolgend erfasst und weiterverarbeitet bzw. in den Presskanal gedrückt wird.

Wesentlich ist, dass im Übergansgereich von den Presszinken zu den Schaufeln kein Spalt verbleibt und die Anzahl der Schaufelreihen der Anzahl der Zinkenreihen entspricht, so dass jeweils einer Schaufel ein äußerer Presszinken zugeordnet ist.

Im Gegensatz zu den aus DE 102009017400 A1 und DE 202010002458 U1 bekannten Ladewagen erfolgt die Verschmälerung des Erntegutstroms somit nicht im Bereich zwischen Aufnahmevorrichtung (Pick up) und Pressvorrichtung bzw. Rotor, sondern auf dem Rotor selbst. Der Rotor weist deshalb eine Gesamtarbeitsbreite auf, die sich aus einer mittleren, sich über die Presszinken erstreckenden, Arbeitsbreite sowie über beidseitig davon angeordnete, mit Schaufeln besetzte, seitlichen Arbeitsbreiten zusammensetzt.

Dabei kann die Gesamtarbeitsbreite des Rotors in etwa der Arbeitsbreite der Aufnahmevorrichtung entsprechen. Nicht ausgeschlossen ist jedoch, dass die Arbeitsbreite der Aufnahmevorrichtung die Arbeitsbreite des erfindungsgemäßen Rotors seitlich überragt. In diesem Fall sind Mittel, beispielsweise Leitbleche, vorgesehen, die das von der Aufnahmevorrichtung seitlich erfasste Erntegut dem Rotor, bzw. dessen Seitenbereich, zuführen.

Der Presskanal weist eine Breite auf, die in etwa der Breite des Bereiches entspricht, auf dem der Rotor mit Presszinken besetzt ist. Damit das dem Rotor in den seitlichen Arbeitsbereichen zugeführte Erntegut in den Presskanal gelangen kann, sind die dort angeordneten Schaufeln so ausgerichtet, dass eine entsprechende Zwangsführung des Erntegutes zu den Presszinken und im Anschluss daran in den Presskanal gewährleistet ist.

Vorzugsweise weisen die Schaufeln den gleichen Umfangsdurchmesser auf, wie ein durch die Spitzen der Presszinken ausgebildeter Umfangskreis. Hierdurch wird an den Übergangsstellen von den mit Schaufeln besetzten seitlichen Arbeitsbereichen zum mit Presszinken besetzten mittleren Arbeitsbereich des Rotors der Fluss des Ernteguts begünstigt.

Zur Vermeidung von Lastspitzen, die entstehen würden, wenn die Presszinken in zueinander parallelen Reihen auf dem Rotor angeordnet wären, sind die Presszinken mit Versatz zueinander angeordnet, so dass sich insgesamt spiralförmige Reihen ergeben. Die sich über die gesamte, mit Presszinken besetzte, mittlere Arbeitsbereite erstreckende spiralförmige Ausrichtung bewirkt in Verbindung mit der jeweils den Presszinken zugewandten Förderrichtung der Schaufeln, dass lediglich an einer Seite des Rotors die durch die Schaufeln vorhandenen Spalten und die zwischen den Presszinken-Reihen vorhandenen Freiräume widerstandsarm ineinander übergehen. Zur Vermeidung von Stauungen des Ernteguts ist in einer bevorzugten Ausführungsform ein Rotor vorgesehen, bei dem die mit Presszinken besetzte Arbeitsbreite einen Teilabschnitt enthält, dessen spiralförmige Anordnung der Presszinken mit entgegengesetzter Steigung zu den weiteren Presszinken verläuft. Die zwischen den Schaufeln befindlichen Spalten und die zwischen den Presszinken befindlichen Freiräume bilden so jeweils Förderkanäle, die nicht nur an einer, sondern an beiden Seiten des Rotors, in gleicher Steigungsrichtung ineinander übergehen.

Der genannte Teilabschnitt mit entgegengesetzter Steigung kann bis zur Mitte des Rotors reichen. Alternativ dazu kann auch vorgesehen sein, dass die sich an die Schaufeln anschließende Steigung der Presszinken-Reihen eine nur wenige Presszinken überdeckenden Breite aufweist.

Um einen zu starken Druckaufbau gegen die Seitenwände des Laderaums im Bereich oberhalb des Rotors zu verhindern weist der Laderaum vorzugsweise eine Breite auf, die größer ist als die lichte Weite des Presskanals. Da der Laderaum breiter ist als der Presskanal, durch welchen er befüllt wird, entspannt sich das im Presskanal zunächst stark verdichtete Erntegut nach Verlassen des Presskanals zu den Seiten hin. Hierbei ist es wichtig, dass einerseits die Seitenbereiche des Laderaums gut gefüllt werden und andererseits kein zu hoher Druck auf die Seitenwände des Laderaums ausgeübt wird, der das anschließende Entladen behindert.

Die Entladung des mit Erntegut beladenen Ladewagens erfolgt mittels eines als Fördermittel vorgesehenen Kratzbodens durch die geöffnete Heckklappe. Das Erntegut darf somit nicht so stark im Laderaum verpresst sein, dass der vom Erntegut gegen die Innenflächen der Laderaum-Seitenwände ausgeübte Druck eine Förderung des Ernteguts mittels des Kratzbodens behindert oder vollständig ausbremst. Dies ist beispielsweise der Fall, wenn zwischen den Seitenwänden eingeklemmtes Futter oberhalb des Rotors eine Art Brücke bildet, unter welcher der Kratzboden wirkungslos durchgezogen wird.

Zur Vermeidung von Störungen können im seitlichen Übergangsbereich von Presskanalausgang zu Laderaum, und somit oberhalb der Schaufeln, zum Laderaum hin, Abdeckungen vorgesehen sein, die mittels ihrer Wandflächen den sich erweiternden Presskanal bilden. Diese Abdeckungen werden so über dem Rotor links und rechts über den neben den Presszinken angeordneten Schaufeln angebracht, dass diese zum Laderaum hin abgedeckt sind um Kontakt mit dem im Laderaum befindlichen Erntegut zu vermeiden. Die Abdeckungen oberhalb der Schaufeln stellen somit eine Art Verlängerung des Presskanals dar. Störungen, wie Verstopfungen und Vermusungen, die ohne das Vorhandensein der Abdeckungen an den Kontaktstellen zwischen Schaufeln und geladenem Erntegut auftreten können, werden hierdurch vermieden.

In einer vorteilhaften Ausführung ist zwischen der Aufnahmevorrichtung und dem Rotor eine Förderwalze angeordnet. Die Förderwalze trägt zur Homogenisierung des Futterstroms bei und reduziert Leistungsspitzen.

Besonders vorteilhaft ist es, die Förderwalze mit Spiralen wechselnder Querförderrichtung auszustatten, wobei die äußeren Spiralen das von der Pick-up in den Seitenbereichen aufgenommene Futter in Richtung Presskanal leiten und die Förderwirkung der Schaufeln des Rotors zum Presskanal hin unterstützen.

Um zu verhindern, dass das von den Schaufeln zu fördernde Erntegut diese umwickelt, sind in den von den Schaufeln besetzten Abschnitten bis in die Nähe des Umfangkreises der Schaufeln reichende Abstreifschienen angeordnet, an denen entlang das Erntegut zum Presskanal geführt wird.

Die Abstreifschienen können parallel zur Achse des Rotors verlaufen und zur baldigen Erfassung des Futters in Nähe der Einlaufkante der Rückwand der Pressvorrichtung angeordnet sein.

In einer anderen Ausführungsform ist zumindest eine Teillänge der Abstreifschienen zur Förderrichtung der Schaufeln spiralförmig ansteigend angeordnet sind. Die spiralförmig angeordneten Abstreifschienen verbessern den Futterabfluss beim Übergang in den Presskanal, da eine weniger abrupte Umlenkung erfolgt.

Die Erfindung wird nachstehend als Beispiel beschrieben und in den Zeichnungen dargestellt.
- Fig. 1: zeigt den Querschnitt der Ladevorrichtung eines Ladewagens in einer Seitenansicht;

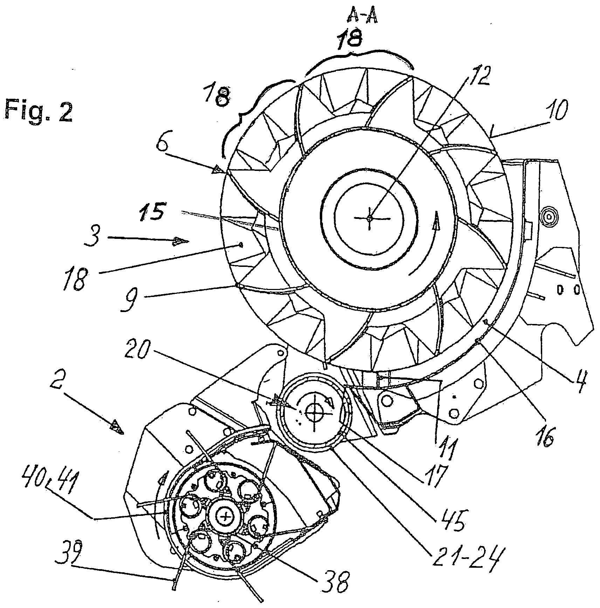

- Fig. 2: zeigt einen weiteren Querschnitt der Ladevorrichtung nach Schnitt A-A aus Fig. 3;
- Fig. 3: zeigt eine Ansicht von vorn auf die Ladevorrichtung;

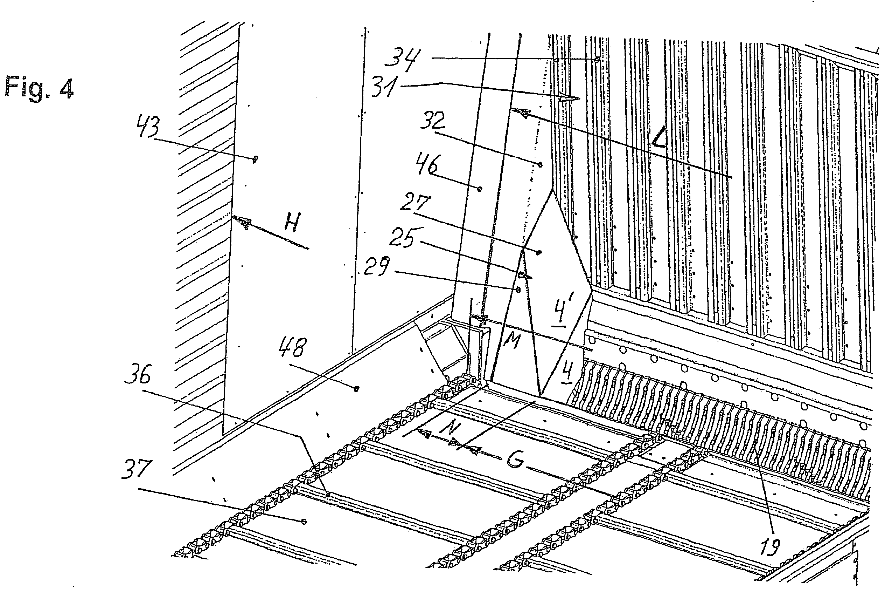

- Fig. 4: zeigt eine perspektivische Sicht in den vorderen, in Fahrtrichtung, linken Teil des Laderaums eines Ladewagens;

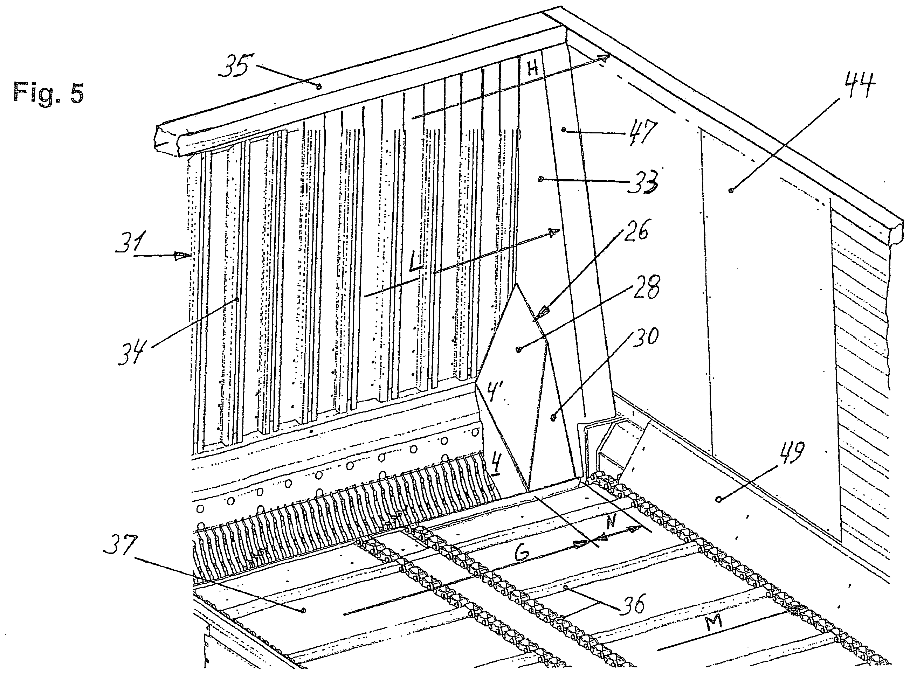

- Fig. 5: zeigt eine perspektivische Sicht in den vorderen, in Fahrtrichtung rechten, Teil des Laderaums;
- Fig. 6: zeigt eine Ladevorrichtung mit einem alternativ ausgeführten Rotor.

Gleiche oder ähnliche Elemente können in den nachfolgenden Figuren mit gleichen oder ähnlichen Bezugszeichen versehen sein. Ferner enthalten die Figuren der Zeichnung, deren Beschreibung sowie die Ansprüche zahlreiche Merkmale in Kombination. Einem Fachmann ist dabei klar, dass diese Merkmale auch einzeln betrachtet werden oder sie zu weiteren, hier nicht näher beschriebenen Kombinationen zusammengeführt werden können.

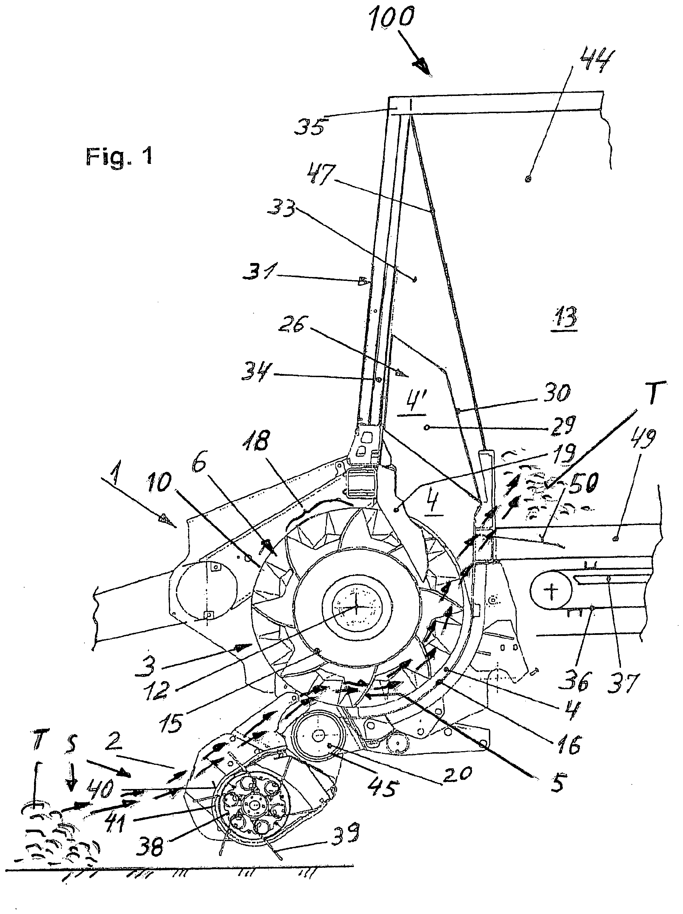

Figur 1 zeigt den Ausschnitt eines an sich bekannten Ladewagens 100 im Bereich der Ladevorrichtung 1, die in dessen in Fahrtrichtung vorderem Teil angeordnet ist. Die Ladevorrichtung besteht im Wesentlichen aus einer Aufnahmevorrichtung 2 (Pick-up), einer Förderwalze 20 und einer Pressvorrichtung 3 mit nachgeordnetem Laderaum 13.

Die Aufnahmevorrichtung 2 besitzt eine mit Federzinken 39 besetzte Trommel 38, wobei die Federzinken 39 aus Spalten 42 hervortreten, die von einem aus Abstreifern 41 bestehendem Gehäusemantel 40 gebildet werden.

Die der Aufnahmevorrichtung 2 nachgeordnete Förderwalze 20 besteht aus einem Rohrkörper 45, der mit Spiralen 21, 22, 23, 24 gegenläufiger Transportrichtung besetzt ist. Die Förderwalze 20 weist eine Arbeitsbreite K auf, die den Arbeitsbreiten B und C von Aufnahmetrommel 2 und Rotor 6 entspricht.

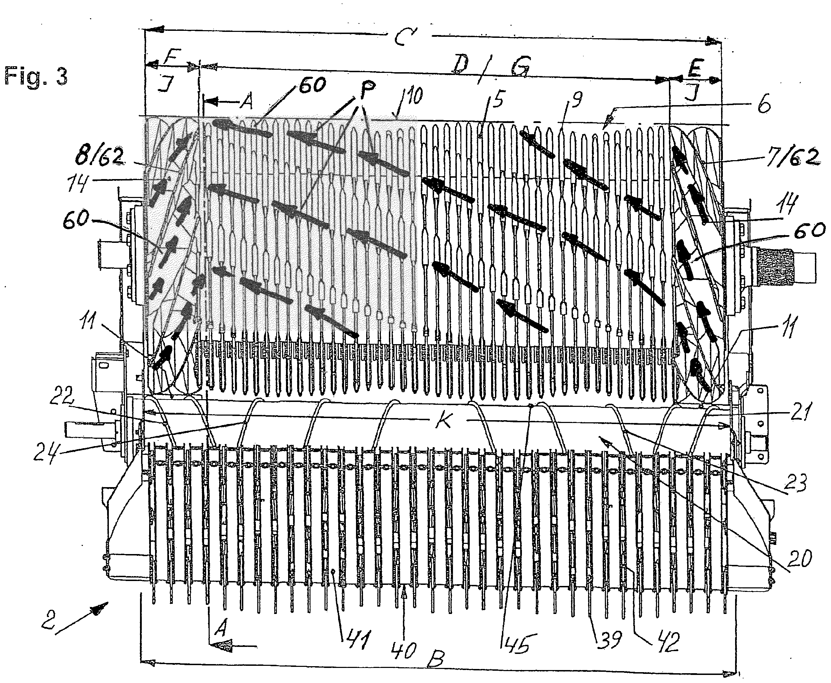

Der Förderwalze 20 anschließend ist der Rotor 6 angeordnet. Dieser umfasst eine gesamte Arbeitsbreite C, die aufgeteilt ist in eine mittlere Arbeitsbreite D, die mit Presszinken 5 besetzt ist, und zwei äußere Arbeitsbreiten E, F, die spiralförmig verlaufende Schaufeln 7, 8 tragen, welche Querfördermittel 62 ausbilden (vergl. Fig. 3). Die Schaufeln 7, 8 fördern das in den Seitenbereichen von der Aufnahmevorrichtung 2 aufgenommen Erntegut T quer zur Flussrichtung des Erntegutstroms S in Richtung der Presszinken 5.

Die Presszinken 5 durchlaufen im Förder- und Pressbereich einen Presskanal 4. Dieser besitzt eine Rückwand 16, die in bekannter Weise von ein- und ausschwenkbaren Schneidmessern (nicht dargestellt) durchgriffen wird. Die Vorderwand des Presskanals 4 besteht im Wesentlichen aus einem aus Abstreifern 19 gebildeten kammförmigen Gitter, wobei sich die Abstreifer 19 bis in die Nähe des Zentralrohrs 15 des Rotors 6 erstrecken.

Der Presskanal 4 weist eine lichte Weite G auf, die etwa der Arbeitsbreite D der Presszinken 5 entspricht. Er mündet unten in den vorderen Bereich des Laderaums 13, dessen Breite H wesentlich größer ist, als die Breite, die durch die lichte Weite G des Presskanals 4 abgedeckt ist. An der Vorderseite des Presskanals 4 schließt ein Stirngitter 31 an, das die Vorderwand des Laderaums 13 bildet. Das Stirngitter 31 besteht im Wesentlichen aus Gitterstäbe 34, die nach oben ansteigend, schräg nach hinten verlaufend, angeordnet sind und an der im mittleren oder hinteren Bereich oberhalb des Presskanals angeordneten Quertraverse 35 des Stirngitters 31 enden.

Das Stirngitter 31 wird seitlich durch keilförmige Seitenwände 32, 33 begrenzt und weist eine lichte Weite L auf, die etwa einer Breite M des von einem Kratzboden 36 umlaufenen Bodens 37 des Laderaums 13 gebildet wird.

An den Innenflächen der Seitenwände 32, 33 sind schräg verlaufende Abdeckungen 25, 26 der Breite N angebracht, welche den Rotor 6 in den mit Schaufeln 7, 8 besetzten Bereichen E, F abdecken. Die Abdeckungen 25, 26 weisen Wandflächen 27, 29 auf, die an den Presskanal 4 anschließen und einen sich nach oben erweiternden Presskanalausgang 4' ergeben. Die Seitenwände 32, 33 des Stirngitters 31 besitzen abgewinkelte Randstreifen 46, 47. Die Randstreifen 46, 47 überbrücken die Breitendifferenz zwischen lichter Weite L des Stirngitters 31 und einer Breite H des Laderaums 13. An die Breite M des Bodens 37 passt sich die Breite H des Laderaums 13 mittels schräg angeordneter Seitenwände 48, 49 an.

Die Aufnahmevorrichtung 2 nimmt das zu bergende, im Allgemeinen in Futterschwaden zusammengelegte, Erntegut T mittels seiner auf der rotierenden Trommel 38 angebrachten Förderzinken 39 auf und fördert es über die Abstreifer 41 zur Förderwalze 20, welche es dem Rotor 6 übergibt (vergl. Fig. 1).

Die Förderwalze 20 unterstützt mit ihren äußeren Spiralen 21, 22 die Förderwirkung der Schaufeln 7, 8 des Rotors 6 zum Presskanal 4 hin. Die Spiralen 23, 24 entzerren die in den aufgenommenen Futterschwaden auftretenden ungleichen Strukturen und unterstützen den Übergang des Ernteguts T in den Presskanal 4.

Die Rückwand 16 des Presskanals 4 weist eine Einlaufkante 17 auf, die nah an die Förderwalze 20 herangeführt ist und als Abstreifer dient.

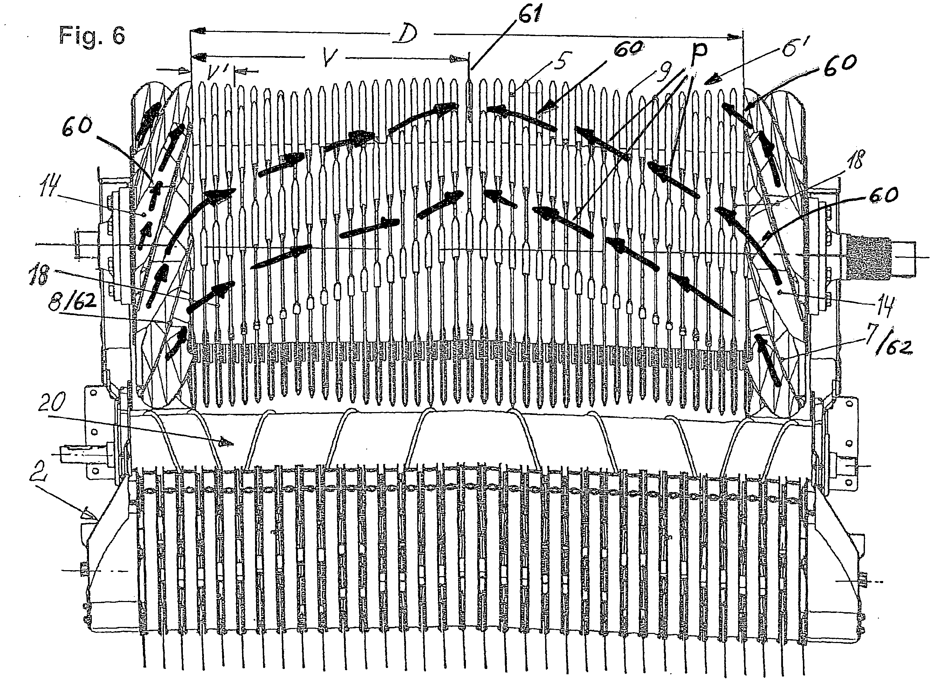

Der Rotor 6 erfasst mit seinen spiralförmig ausgebildeten Schaufeln 7, 8 das in den Arbeitsbreiten E, F von der Förderwalze 20 zugeführte Erntegut T und führt es, am Umfangkreis 10 der Schaufeln 7, 8 sowie in den dazwischen befindlichen Spalten 14, an den Abstreifschienen 11 entlang durch den Feiraum 18 vor die Presszinken 5. Die Spalten 14 zwischen den Schaufeln 7, 8 und die radial angeordneten Freiräume 18 zwischen den Presszinken 5 bilden Förderkanäle 60 aus, deren Lage und Förderrichtung in den Figuren 3 und 6 durch Pfeile P dargestellt ist. Hierdurch wird ein kontinuierlicher Vorschub sichergestellt und Wickelerscheinungen werden verhindert. Die Abstreifschienen 11, die parallel zur Rotorachse 12 verlaufen, können auch in Förderrichtung ansteigend ausgeführt sein, wodurch ein fließenden Übergang des von den Schaufeln 7, 8 zugeführten Ernteguts T durch die Freiräume 18 vor die Presszinken 5 begünstigt wird.

Das von den Presszinken 5 direkt erfasste und von den Schaufeln 7, 8 zugeführte Erntegut T wird durch den Presskanal 4 in den Laderaum 13 gedrückt. Beim Durchgang wird das Erntegut T im Allgemeinen auf eine gewünschte Länge zerschnitten. Dies erfolgt in bekannter Weise durch im Presskanal 4 angeordnete Schneidmesser (nicht dargestellt), die durch Schlitze in der Rückwand 16 des Presskanals ein- und ausschwenkbar sind.

Am Presskanalausgang 4' wird das Erntegut T von den Abstreifern 19 von den Presszinken 5 abgelöst und, vom schräg nach hinten ansteigenden Stirngitter 31 unterstützt, in den Laderaum 13 geleitet. Dort wird es über eine an der Rückwand 16 der Pressvorrichtung 3 befindliche Überleitungsbrücke 50 auf dem Boden des Laderaums 13, der von einem Kratzboden 36 umlaufen wird, abgelegt.

Bei zunehmender Befüllung des Laderaums 13 wird das stetig nachgeförderte Erntegut T gegen die bereits eingebrachte Ladung gepresst. Mit zunehmender Ladung steigt der Druck an, da mehr Masse, die verdrängt werden muss, mehr Gegendruck aufbaut.
Um die Ausfüllung des Laderaums 13 zu optimieren und zur Erhöhung der Lademenge ist eine Verdichtung der Ladung notwendig. Das Erntegut T wird somit solange unter steigendem Gegendruck in den Laderaum 13 gefördert, bis die gewünschte Verdichtung erreicht ist. Sowie dieser Zustand erreicht ist, wird zur Druckentlastung der zuvor still stehende Kratzboden 36 gestartet und der Bereich oberhalb des Presskanalausgangs 4' freigeräumt.

Die Verdichtung des Ernteguts T kann bei fast vollem Laderaum 13 so stark ansteigen, dass der Innendruck der Ladung, der gegen die Seitenwände 32, 33 drückt, insbesondere im vorderen Pressbereich des Laderaums 13 so weit ansteigt, dass beim Entladen im Vorderteil des Laderaums 13 eingeklemmtes Erntegut T über dem Kratzboden 36 eine Brücke bildet, unter welcher der Kratzboden 36 wirkungslos hindurchläuft. Auch oberhalb des Presskanals 4 führt hoher Innendruck der Ladung dazu, dass Erntegut T zwischen den Seitenwänden 32, 33 des Stirngitters 31 eingeklemmt stehen bleiben kann, selbst wenn die Ladung schon vollständig abgeladen ist.

Um einen erhöhten Innendruck im Ladegut zu vermeiden und um dadurch bedingte erhöhte Presswirkungen zwischen Seitenwänden 32, 33 des Stirngitters 31 und des Laderaums 13 so weit herabzusetzen, dass die Ladung zügig mittels des Kratzbodens 36 entladen werden kann, ist als entlastende Maßnahme die lichte Weite G des Presskanals 5 schmaler ausgeführt als die lichte Weiter L der Seitenwände 32, 33 des Stirngitters 31 und auch als die Breite H des Laderaums 13. Die Breitendifferenzen zwischen den Seitenwänden 32, 33 der Stirnwand 31 und dem Presskanal 4 werden im Bereich des Presskanalausgangs 4' mittels der Abdeckungen 25, 26 überbrückt.

Die Abdeckungen 25, 26 sind keilförmig ausgebildet, sie besitzen schräg ansteigende Wandflächen 27, 28 die vom Presskanal 4 ausgehend bis an die Seitenwände 32, 33 führen. Die stirnseitigen Wandflächen 29, 30 sind zum Laderaum 13 ausgerichtet. Neben der Aufgabe eine kontinuierliche Ausdehnung des Presskanalausgangs 4' auszubilden haben die Abdeckungen 25, 26 die Aufgabe die Schaufeln 7, 8 des Rotors 6 im Bereich der Arbeitsbreiten E, F zum Laderaum 13 hin abzuschirmen, da andernfalls in diesen Bereichen Störungen, wie z.B. Verstopfen, Wickeln oder Vermusen des Ladeguts auftreten könnten. Um dieses zu vermeiden sind die Abdeckungen 25, 26 unten mit Böden verschlossen, deren Kontur sich an den von den Schaufeln 7, 8 überstrichenen Flächen orientiert und somit im Wesentlichen zylindermantelförmig ist.

Durch den erweiterten Presskanalausgang 4' ist das Erntegut T in der Lage in diese Erweiterung auszuweichen und zu entspannen. Dadurch wird der Innendruck der Ladung so weit reduziert, dass die durch den Innendruck an den Bordwänden 43, 44 erzeugten Reibwerte so herabgesetzt werden, dass ein störungsfreies Entladen mittels des Kratzbodens 36 erfolgen kann. Die Gefahr, dass zwischen den Seitenwänden 32, 33 der Stirnwand 31 befindliches Futter einklemmt bzw. hängen bleibt, wird hierdurch ebenfalls stark reduziert bzw. ganz ausgeschlossen.

In einer alternativen, in den Figuren nicht dargestellten Ausführung, kann die Ladevorrichtung 1 ohne Förderwalze 20 ausgeführt werden. Eine derartige Ladevorrichtung ist preiswerter. Zwar wird hierbei auf die Homogenisierung der Futterschwaden vor dem Eintritt in den Presskanal 4 verzichtet, die Funktion dieser Ladevorrichtung im Übrigen jedoch der Funktion der in den Figuren dargestellten Ladevorrichtung 1.

Die durchgehend spiralförmige Anordnung der Presszinken 5 des Rotors 6 erlaubt dem Erntegut T, welches von den Schaufeln 7 mittels der Spalten 14, in die zwischen den Presszinken 5 befindlichen Freiräume 18 geführt wird, einen fließenden, stoßfreien Übergang in diese Freiräume 18, da die Steigungsrichtung von Schaufeln 7 und Presszinken 5 in gleicher Richtung verläuft.

Das von den Schaufeln 8 den Presszinken 5 zugeführte Erntegut T trifft jedoch beim Übergang aus den Spalten 14 in die Freiräume 18 auf eine gegenläufige Steigungsrichtung der Presszinken 5. Hier können je nach Art und Zustand des Ernteguts T, bzw. auch bei schwierigen Erntebedingungen, Stauerscheinungen auftreten.

Um diese Behinderung auszuschließen ist es vorteilhaft, den Rotor 6 durch einen Rotor 6' zu ersetzen, welcher im Bereich der Arbeitsbereite D auf einem Teilabschnitt mit der Arbeitsbreite V' mit Presszinken 5 besetzt ist, deren spiralförmige Anordnung zu den vorhandenen Presszinken 5 gegenläufig angeordnet ist (s. Fig. 6). Durch diese Ausführung wird auf beiden Seiten des Rotors 6' dem Erntegut T von den Schaufeln 7, 8 ein fließender, staufreier Eingang in die Freiräume 18 zwischen den Presszinken 5 ermöglicht. Die durch die Spalten 14 zwischen den Schaufeln 7, 8 und die Freiräume 18 zwischen den Presszinken 5 ausgebildeten Förderkanäle 60 treffen im in Fig. 6 dargestellten Ausführungsbeispiel in der Mitte 61 des Rotors 6' aufeinander.

Die Arbeitsbreite V kann die halbe Arbeitsbreite D einnehmen, jedoch auch auf eine nur über einige seitliche Presszinken 5 überdeckende Breite V' reduziert sein, da das seitlich zugeführte Erntegut T gleich von den äußeren Presszinken 5 erfasst wird.

## Patentansprüche

1. Ladewagen (100) mit einer Ladevorrichtung (1) für aus Halm- oder Blattgut bestehendes Erntegut, umfassend:
- eine mit Aufnahmezinken (39) besetzte Aufnahmevorrichtung (2) mit einer Arbeitsbreite (B), welche das Erntegut vom Boden aufnimmt,
- eine der Aufnahmevorrichtung (2) nachgeordneten Pressvorrichtung (3) zur Weiterleitung des Erntegutes, wobei die Pressvorrichtung (3):
• einen Presskanal (4) und einen Rotor (6; 6') mit in mehreren Reihen spiralförmig angeordneten Presszinken (5) umfasst,
• wobei die Presszinken (5) eine Arbeitsbreite (D) aufweisen, die in etwa einer lichten Weite (G) des Presskanals (4) entspricht,
• wobei der Rotor (6, 6') eine Gesamtarbeitsbreite (C) aufweist, die sich aus einer mittleren, sich über die Presszinken (5) erstreckenden, Arbeitsbreite (D) sowie über beidseitig davon angeordnete, mit Querfördermitteln (62) besetzte, seitlichen Arbeitsbreiten (E, F) zusammensetzt,
• wobei die Querfördermittel (62) als Schaufeln (7, 8) ausgebildet sind
• und wobei die Arbeitsbreiten (B, C) von Aufnahmevorrichtung (2) und Rotor (6; 6') größer sind als die lichte Weite (G) des Presskanals (4)
- einen der Pressvorrichtung (3) nachgeordneten Laderaum (13),
**dadurch gekennzeichnet, dass**
an jedem äußeren Presszinken (5) auf dem Rotor (6; 6') eine der Schaufeln (7, 8) anschließt und bis an die jeweilige Spitze (9) des jeweiligen Presszinkens (5) heranreicht, wobei im Übergangsbereich von den Presszinken (5) zu den Schaufeln (7, 8) kein Spalt verbleibt, so dass zwischen den Schaufeln (7, 8) ausgebildete Spalten (14) und zwischen den Presszinken (5) befindliche Freiräume (18) Förderkanäle (60) bilden, in welchen von der Aufnahmevorrichtung (2) zugeführtes Erntegut (T) quer zur Flussrichtung des Erntegutstroms (S) förderbar ist.

2. Ladewagen (100) mit einer Ladevorrichtung (1) nach Anspruch 1, **dadurch gekennzeichnet, dass** die Schaufeln (7, 8) den gleichen Umfangsdurchmesser aufweisen, wie ein durch die Spitzen (9) der Presszinken (5) ausgebildeter Umfangskreis (10).

3. Ladewagen (100) mit einer Ladevorrichtung (1) nach Anspruch 1 oder 2, **dadurch gekennzeichnet, dass**
- die mit Presszinken (5) besetzte Arbeitsbreite (D) des Rotors (6') einen Teilabschnitt mit einer Arbeitsbreite (V) enthält, dessen spiralförmige Anordnung der Presszinken (5), mit entgegengesetzter Steigung zu den weiteren Presszinken (5) verläuft,
- die zwischen den Schaufeln (7, 8) befindlichen Spalten (14) und die zwischen den Presszinken (5) befindlichen Freiräume (18) eine Art Förderkanal bildend, stoßfrei in gleicher Steigungsrichtung ineinander übergehen.

4. Ladewagen (100) mit einer Ladevorrichtung (1) nach Anspruch 3, **dadurch gekennzeichnet, dass** sich die Arbeitsbreite (V) des Rotors (6') von einer nur wenige Presszinken (5) überdeckenden Breite (V') des Rotors (6') bis zur Mitte der Arbeitsbreite (D) erstreckt.

5. Ladewagen (100) mit einer Ladevorrichtung (1) nach einem der Ansprüche 1 bis 4, **dadurch gekennzeichnet, dass** der Laderaum (13) eine Breite (H) aufweist, die größer ist, als die lichte Weite (G) des Presskanals (4)

6. Ladewagen (100) mit einer Ladevorrichtung (1) nach Anspruch 5, **dadurch gekennzeichnet, dass** im Bereich oberhalb der Schaufeln (7, 8) über dem Rotor (6; 6'), zum Laderaum (13) hin, Abdeckungen (25, 26) vorgesehen sind, und die Abdeckungen (25, 26) mittels ihrer Wandflächen (27, 28) den sich erweiternden Presskanal (4') bilden

7. Ladewagen (100) mit einer Ladevorrichtung (1) nach einem der Ansprüche 1 bis 6, **dadurch gekennzeichnet, dass** zwischen der Aufnahmevorrichtung (2) und dem Rotor (6; 6') eine Förderwalze (20) angeordnet ist.

8. Ladewagen (100) mit einer Ladevorrichtung (1) nach Anspruch 7, **dadurch gekennzeichnet, dass** die Förderwalze (20) mit Spiralen (21, 22, 23, 24) wechselnder Querförderrichtung ausgestattet ist, wobei die äußeren Spiralen (21, 22) in Richtung Presskanal (4) führen.

9. Ladewagen (100) mit einer Ladevorrichtung (1) nach einem der Ansprüche 1 bis 8, **dadurch gekennzeichnet, dass** im Bereich der Arbeitsbreite (E) der Schaufeln (7) und im Bereich der Arbeitsbreite (F) der Schaufeln (8) bis in Nähe des Umfangskreises (10) der Schaufeln (7, 8) reichende Abstreifschienen (11) angeordnet sind.

10. Ladewagen (100) mit einer Ladevorrichtung (1) nach Anspruch 9, **dadurch gekennzeichnet, dass** die Abstreifschienen (11) parallel zur Achse (12) des Rotors (6; 6') verlaufen und in Nähe der Einlaufkante (17) der Rückwand (16) der Pressvorrichtung (3) angeordnet sind.

11. Ladewagen (100) mit einer Ladevorrichtung (1) nach einem der Ansprüche 9 oder 10, **dadurch gekennzeichnet, dass** zumindest eine Teillänge der Abstreifschienen (11) zur Förderrichtung der Schaufeln (7, 8) spiralförmig ansteigend angeordnet ist.

## Claims

1. Loading vehicle (100) with a loading device (1) for crop consisting of stems and leaves, comprising:
- a pick-up device (2) which is fitted with pick-up tines (39), has a working width (B) and picks up the crop from the ground,
- a pressing device (3) arranged downstream of the pick-up device (2) for conducting the crop further, wherein the pressing device (3):
• comprises a pressing channel (4) and a rotor (6; 6') with pressing tines (5) arranged spirally in a plurality of rows,
• wherein the pressing tines (5) have a working width (D) which approximately corresponds to a clear width (G) of the pressing channel (4),
• wherein the rotor (6, 6') has an overall working width (C) which is composed of a middle working width (D) extending over the pressing tines (5), and of lateral working widths (E, F) which are arranged on both sides of said middle working width and are fitted with transverse conveyor means (62),
• wherein the transverse conveyor means (62) are designed as blades (7, 8),
• and wherein the working widths (B, C) of pick-up device (2) and rotor (6; 6') are greater than the clear width (G) of the pressing channel (4),
- a loading compartment (13) arranged downstream of the pressing device (3),
**characterized in that** one of the blades (7, 8) adjoins each outer pressing tine (5) on the rotor (6; 6') and extends as far as the respective point (9) of the respective pressing tine (5), wherein a gap does not remain in the transition region from the pressing tines (5) to the blades (7, 8), and therefore gaps (14) formed between the blades (7, 8) and clearances (18) located between the pressing tines (5) form conveyor channels (60) in which crop (T) supplied by the pick-up device (2) can be conveyed transversely with respect to the direction of flow of the crop flow (S).

2. Loading vehicle (100) with a loading device (1) according to Claim 1, **characterized in that** the blades (7, 8) have the same circumferential diameter as a circumferential circle (10) formed by the points (9) of the pressing tines (5).

3. Loading vehicle (100) with a loading device (1) according to Claim 1 or 2, **characterized in that**
- the working width (D) of the rotor (6'), which working width is fitted with pressing tines (5), contains a partial section with a working width (V) whose spiral arrangement of the pressing tines (5) runs with an opposite pitch to the further pressing tines (5),
- the gaps (14) located between the blades (7, 8) and the clearances (18) located between the pressing tines (5) merge into one another in the same pitch direction without abutting, forming a type of conveyor channel.

4. Loading vehicle (100) with a loading device (1) according to Claim 3, **characterized in that** the working width (V) of the rotor (6') extends from a width (V') of the rotor (6'), said width covering only a few pressing tines (5), up to the centre of the working width (D).

5. Loading vehicle (100) with a loading device (1) according to one of Claims 1 to 4, **characterized in that** the loading compartment (13) has a width (H) which is greater than the clear width (G) of the pressing channel (4).

6. Loading vehicle (100) with a loading device (1) according to Claim 5, **characterized in that**, in the region above the blades (7, 8), coverings (25, 26) are provided over the rotor (6; 6') towards the loading compartment (13), and the coverings (25, 26) by means of their wall surfaces (27, 28) form the expanding pressing channel (4').

7. Loading vehicle (100) with a loading device (1) according to one of Claims 1 to 6, **characterized in that** a conveyor roller (20) is arranged between the pick-up device (2) and the rotor (6; 6').

8. Loading vehicle (100) with a loading device (1) according to Claim 7, **characterized in that** the conveyor roller (20) is fitted with spirals (21, 22, 23, 24) of alternating transverse conveying direction, wherein the outer spirals (21, 22) lead in the direction of the pressing channel (4).

9. Loading vehicle (100) with a loading device (1) according to one of Claims 1 to 8, **characterized in that**, in the region of the working width (E) of the blades (7) and in the region of the working width (F) of the blades (8), stripper rails (11) are arranged reaching into the vicinity of the circumferential circle (10) of the blades (7, 8).

10. Loading vehicle (100) with a loading device (1) according to Claim 9, **characterized in that** the stripper rails (11) run parallel to the axis (12) of the rotor (6; 6') and are arranged in the vicinity of the inlet edge (17) of the rear wall (16) of the pressing device (3).

11. Loading vehicle (100) with a loading device (1) according to either of Claims 9 and 10, **characterized in that** at least a partial length of the stripper rails (11) is arranged rising spirally with respect to the conveying direction of the blades (7, 8).

## Revendications

1. Chariot de chargement (100) comprenant un dispositif de chargement (1) pour la récolte de produits en tiges ou en feuilles, comprenant :
- un dispositif de prélèvement (2) muni de dents de prélèvement (39) ayant une largeur de travail (B), qui prélève la récolte à partir du sol,
- un dispositif de pressage (3) disposé après le dispositif de prélèvement (2) pour guider la récolte, le dispositif de pressage (3) comprenant :
- un canal de pressage (4) et un rotor (6 ; 6') avec des dents de pressage (5) disposées en spirale en plusieurs rangées,
- les dents de pressage (5) présentant une largeur de travail (D) qui correspond approximativement à une largeur intérieure (G) du canal de pressage (4),
- le rotor (6, 6') présentant une largeur de travail totale (C) qui se compose d'une largeur de travail centrale (D) s'étendant sur les dents de pressage (5) ainsi que des largeurs de travail latérales (E, F) disposées des deux côtés de celle-ci, munies de moyens de transports transversaux (62),
- les moyens de transports transversaux (62) étant réalisés sous forme de pales (7, 8)
- et les largeurs de travail (B, C) du dispositif de prélèvement (2) et du rotor (6 ; 6') étant supérieures à la largeur intérieure (G) du canal de pressage (4),
- un espace de chargement (13) monté après le dispositif de pressage (3),
**caractérisé en ce que**
l'une des pales (7, 8) se raccorde à chaque dent de pressage extérieure (5) sur le rotor (6 ; 6') et s'étend jusqu'à la pointe respective (9) de la dent de pressage respective (5), aucune fente ne subsistant dans la région de transition des dents de pressage (5) aux pales (7, 8), de telle sorte que des fentes (14) réalisées entre les pales (7, 8) et des espaces libres (18) se trouvant entre les dents de pressage (5) forment des canaux de transport (60) dans lesquels la récolte (T) acheminée à partir du dispositif de prélèvement (2) peut être transportée transversalement à la direction de flux du courant de récolte (S).

2. Chariot de chargement (100) comprenant un dispositif de chargement (1) selon la revendication 1, **caractérisé en ce que** les pales (7, 8) présentent le même diamètre périphérique qu'un cercle périphérique (10) réalisé par les pointes (9) des dents de pressage (5).

3. Chariot de chargement (100) comprenant un dispositif de chargement (1) selon la revendication 1 ou 2, **caractérisé en ce que**
- la largeur de travail (D) du rotor (6') munie de dents de pressage (5) comprend une portion partielle ayant une largeur de travail (V), dont l'agencement en forme de spirale des dents de pressage (5) s'étend avec une pente opposée aux autres dents de pressage (5),
- les fentes (14) situées entre les pales (7, 8) et les espaces libres (18) situés entre les dents de pressage (5) se prolongent les uns dans les autres dans la même direction de pente sans discontinuité en formant une espèce de canal de transport.

4. Chariot de chargement (100) comprenant un dispositif de chargement (1) selon la revendication 3, **caractérisé en ce que** la largeur de travail (V) du rotor (6') s'étend depuis une largeur (V') du rotor (6') couvrant seulement quelques dents de pressage (5) jusqu'au milieu de la largeur de travail (D).

5. Chariot de chargement (100) comprenant un dispositif de chargement (1) selon l'une quelconque des revendications 1 à 4, **caractérisé en ce que** l'espace de chargement (13) présente une largeur (H) qui est supérieure à la largeur intérieure (G) du canal de pressage (4).

6. Chariot de chargement (100) comprenant un dispositif de chargement (1) selon la revendication 5, **caractérisé en ce que** dans la région au-dessus des pales (7, 8) au-dessus du rotor (6 ; 6'), vers l'espace de chargement (13), sont prévus des recouvrements (25, 26) et les recouvrements (25, 26) forment, au moyen de leurs surfaces de paroi (27, 28), le canal de pressage (4') s'élargissant.

7. Chariot de chargement (100) comprenant un dispositif de chargement (1) selon l'une quelconque des revendications 1 à 6, **caractérisé en ce qu'**entre le dispositif de prélèvement (2) et le rotor (6 ; 6') est disposé un rouleau de transport (20).

8. Chariot de chargement (100) comprenant un dispositif de chargement (1) selon la revendication 7, **caractérisé en ce que** le rouleau de transport (20) est muni de spirales (21, 22, 23, 24) ayant un sens de transport transversal alterné, les spirales extérieures (21, 22) conduisant dans la direction du canal de pressage (4).

9. Chariot de chargement (100) comprenant un dispositif de chargement (1) selon l'une quelconque des revendications 1 à 8, **caractérisé en ce que** des rails de raclage (11) s'étendant jusqu'à proximité du cercle périphérique (10) des pales (7, 8) sont disposés dans la région de la largeur de travail (E) des pales (7) et dans la région de la largeur de travail (F) des pales (8).

10. Chariot de chargement (100) comprenant un dispositif de chargement (1) selon la revendication 9, **caractérisé en ce que** les rails de raclage (11) s'étendent parallèlement à l'axe (12) du rotor (6 ; 6') et sont disposés à proximité de l'arête d'entrée (17) de la paroi arrière (16) du dispositif de pressage (3).

11. Chariot de chargement (100) comprenant un dispositif de chargement (1) selon l'une quelconque des revendications 9 ou 10, **caractérisé en ce qu'**au moins une longueur partielle des rails de raclage (11) est disposée de manière à monter en spirale par rapport à la direction de transport des pales (7, 8).
